# DEMANDE DE BREVET EUROPEEN

(11) **EP 1 344 479 A1**
(43) Date de publication de la demande: **17.09.2003**
(21) Numéro de dépôt: 03290547.3
(22) Date de dépôt: 07.03.2003
(51) Int. Cl.: A47L 1/05, B60S 3/04, B24D 13/06

(54) **Appareil portatif avec outil de nettoyage des surfaces planes et carrosseries de vehicules**

(30) Priorité: 11.03.2002 FR 0202995
(71) Demandeur: Perrard, François, 75007 Paris (FR)
(72) Inventeur: Perrard, François, 75007 Paris (FR)

(57) **Abrégé**

Appareil portatif et mobile avec outil rechargeable de nettoyage des surfaces (9) relativement lisses, planes et concaves et notamment des carrosseries de véhicules, constitué d'un moteur électrique (1) entraînant un câble flexible gainé (5) rotatif terminé par un mandrin de serrage (6) qui enserre un outil de nettoyage caractérisé par un support rechargeable constitué d'une barre fendue (7) obturée à ses deux extrémités, par un dispositif amovible (11 et 13) pour l'extrémité externe, par un assemblage type soudure (14) ou par simple maintien en pression du mandrin (6) pour l'extrémité inteme. Le travail d'essuyage linéaire (Fig.2) est obtenu à partir de l'axe rotatif de l'outil maintenu parallèle à la surface à nettoyer et avec une garniture (8) aux dimensions appropriées réalisée à partir de matériau essuyant absorbant jetable. L'utilisation d'un câble flexible gainé rotatif (5) complètent la mobilité et l'ergonomie de l'ensemble.

## Description

La présente invention concerne un appareil portatif mobile pour le nettoyage par essuyage de surfaces planes ou concaves et notamment de carrosserie de véhicules.

Les appareils réalisés à ce jour présentent les inconvénients suivants :
certains ont l'axe de rotation du moteur et de l'outil de nettoyage sur la même ligne ce qui nuit à la maniabilité,
certains ont le moteur et l'outil liés de façon rigide et non pas flexible ce qui nuit à la maniabilité,
certains ont une brosse rotative dont l'axe est perpendiculaire à la surface de travail, ce qui nuit à l'efficacité de l'essuyage,
certains utilisent un liquide sous pression pour provoquer la rotation de la brosse ce qui la rend toujours humide et interdit l'essuyage par absorption ; en outre l'alimentation d'eau nuit à leur maniabilité
certains, par conception, obligent l'opérateur à se baisser pour nettoyer les surfaces verticales basses
certains utilisent des brosses coûteuses, difficiles à nettoyer, ne permettant pas l'utilisation de matériaux d'essuyage absorption jetables et bon marché
d'autres, qui équipent les stations de lavage, ne sont pas portatifs et ne permettent pas l'opération d'essuyage absorption indispensable à l'efficacité du nettoyage.

L'invention a donc plus particulièrement pour but de supprimer les inconvénients précités : le manque de maniabilité, l'axe de rotation perpendiculaire à la surface de travail, l'impossibilité d'essuyer par absorption et d'utiliser des recharges de matériaux d'essuyage absorbant jetables, le manque d'ergonomie.

Cet appareil portatif et mobile comprend un moteur électrique avec douille d'accouplement, un câble flexible gainé rotatif, et un outil de nettoyage constitué d'une barre fendue en deux parties selon son axe vertical fermée à ses deux extrémités, servant de support rechargeable pour une garniture à pouvoir essuyant absorbant et jetable. Les dimensions de la garniture sont optimisées pour transformer le mouvement de rotation de l'outil de nettoyage, axe parallèle à la surface de travail, en mouvement linéaire d'essuyage absorption.

La garniture est mouillée par trempage pour la phase lavage essuyage, sèche pour la phase essuyage absorption. L'outil en rotation est appliqué sur la surface à nettoyer, sans appuyer, et déplacé linéairement.

Les dessins annexés illustrent l'invention :
La figure 1 est une vue en perspective schématique de l'ensemble de l'appareil.
La figure 2 est une coupe de l'outil de nettoyage en mouvement avec sa garniture, la surface de travail et le capot protecteur.
La figure 3 est une coupe axiale de l'outil de nettoyage dans un premier mode de réalisation.
La figure 4 est une coupe axiale de l'outil de nettoyage dans un deuxième mode de réalisation.
La figure 5 est une coupe axiale de la douille d'accouplement du moteur et du câble.

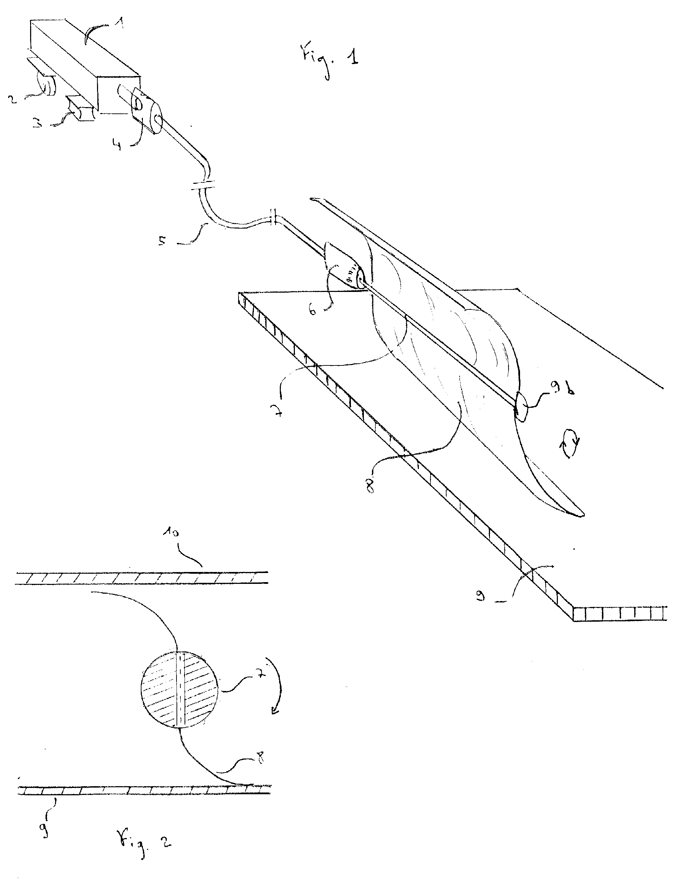

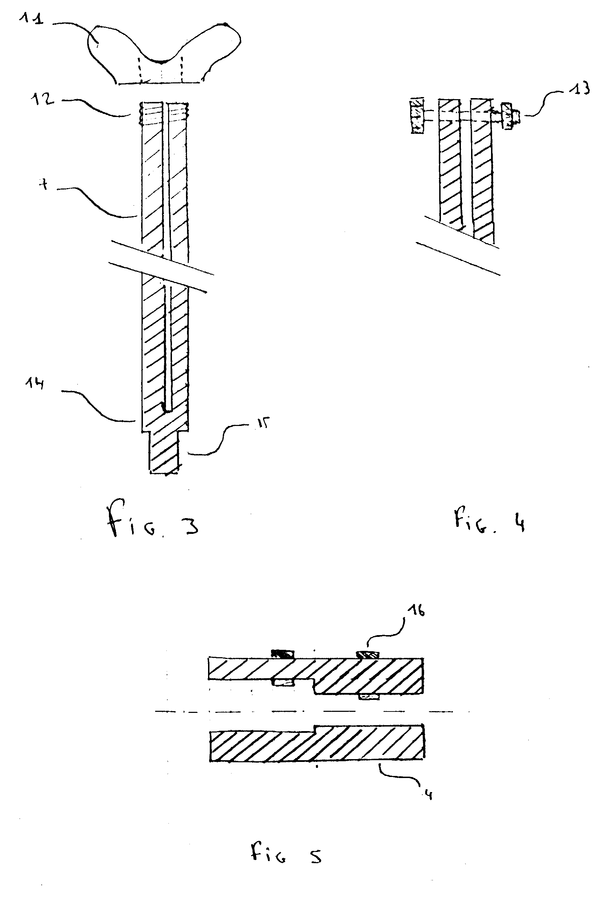

Selon un mode particulier de réalisation l'appareil portatif et mobile, tel que représenté sur la figure 1, est constitué :
d'un moteur électrique (1) asynchrone monophasé, standard, vitesse nominale 900 à 1500 t/mn, puissance 0,1 KW environ, monté sur roulettes (2) et silent blocs (3)
d'une douille d'accouplement (4) avec vis de serrage (16) rendant solidaires lors de la rotation et de la traction l'arbre du moteur et l'embout du flexible
d'un câble flexible (5) gainé, standard, d'environ 1,30 m de long et 8 mm de diamètre, terminé par un mandrin de serrage de 8 mm (6)
d'un outil de nettoyage (7) constitué d'une barre fendue, ou de deux demi-ronds, d'environ 400 mm de long et 10-13 mm de diamètre, obturée à ses deux extrémités.

L'extrémité externe, destiné au chargement - déchargement de la garniture, est, dans un premier mode de réalisation, filetée (12) et obturée par un écrou type papillon (11); dans un deuxième mode de réalisation, le bout de la barre est percé transversalement et obturé par boulon écrou (13); d'autres variantes peuvent utiliser des fermetures amovibles type clips ; cette obturation est protégée par un embout (9) sphérique en plastique modelé

L'extrémité interne, côté mandrin de serrage, est obturée par assemblage type soudage (14) dans un premier mode de réalisation, par simple maintien en pression du mandrin de serrage, dans un deuxième mode de réalisation

L'extrémité interne (15) a un diamètre réduit à 7-8 mm sur 15 mm de long pour s'adapter au diamètre utile du mandrin de serrage d'une garniture (8) rechargeable et jetable de lamelles enfilées de 5 à 10 cm de large sur environ 40 cm de long, ou un format de 40 X 40 cm environ, réalisés dans un matériau tel que feutre ou microfibre, à pouvoir essuyant absorbant, jetable, disponible dans le commerce.

D'un capot de protection (10), non représenté, fixé sur la base du mandrin de serrage, contre les éclaboussures et projections éventuelles.

## Revendications

1. Appareil motorisé portatif mobile destiné au nettoyage-essuyage de surfaces relativement lisses, planes ou concaves et, notamment de carrosseries de véhicules, constitué d'un moteur électrique (1) entraînant un cable flexible gainé (5) rotatif terminé par un mandrin de serrage (6) qui lui-même enserre un outil de nettoyage, **caractérisé par** un support rechargeable constitué d'une barre fendue(7) en deux parties selon son axe vertical obturée à ses deux extrémités, par un dispositif amovible (11 et 13) pour l'extrémité externe, par un assemblage type soudure (14) ou par simple maintien en pression du mandrin de serrage du flexible pour l'extrémité interne.

2. Appareil motorisé selon la revendication (1) caractérisé (Fig.2) par le travail d'essuyage linéaire obtenu à partir de l'axe rotatif de l'outil maintenu parallèle à la surface à nettoyer(9) et avec une garniture (8) aux dimensions appropriées.

3. Appareil motorisé selon l'une quelconque des revendications précédentes **caractérisé par** l'utilisation de recharges (8) de garnitures d'essuyage absorption en matériau jetable disponible dans le commerce.

4. Appareil motorisé selon l'une quelconque des revendications précédentes **caractérisé par** l'utilisation d'un câble flexible gainé (5) rendu solidaire (Fig.5), lors de la rotation et de la traction, de l'arbre du moteur par une douille d'accouplement (4) avec deux vis de serrage (16) permettant sa mobilité et son ergonomie.
